# EUROPÄISCHE PATENTSCHRIFT

(11) **EP 3 250 447 B1**
(45) Veröffentlichungstag und Bekanntmachung des Hinweises auf die Patenterteilung: **20.06.2018**
(21) Anmeldenummer: 16700871.3
(22) Anmeldetag: 12.01.2016
(51) Int. Cl.: B62D 1/04, B62D 1/20, B62D 27/02, B62D 25/14, B62D 1/16

(54) **MODULTRÄGERBAUGRUPPE FÜR EIN KRAFTFAHRZEUG**
MODULE SUPPORT ASSEMBLY FOR A MOTOR VEHICLE
BLOC PORTE-MODULE POUR UN VÉHICULE AUTOMOBILE

(30) Priorität: 30.01.2015 DE 102015101393
(43) Veröffentlichungstag der Anmeldung: 06.12.2017
(73) Patentinhaber: Kirchhoff Automotive Deutschland GmbH, 57439 Attendorn (DE)
(72) Erfinder: MICHLER, Stefan, 57439 Attendorn (DE); DUSZLAK, Lukasz, 39-300 Mielec (PL); MATWICH, Albert, 58540 Meinerzhagen (DE); BARTZIK, Josef, 58644 Iserlohn (DE); MEISTERJAHN, Christoph, 59846 Sundern (DE)
(74) Vertreter: Haverkamp, Jens
(86) Internationale Anmeldenummer: PCT/EP2016/050461
(87) Internationale Veröffentlichungsnummer: WO 2016/120061

(56) Entgegenhaltungen:
- WO-A1-2007/031617
- WO-A1-2008/009683
- DE-A1-102009 026 299
- JP-A- 2014 084 070
- JP-B2- 5 299 571

## Beschreibung

Die Erfindung betrifft eine Modulträgerbaugruppe für ein Kraftfahrzeug zum Positionieren zwischen den A-Säulen der Fahrzeugkarosserie mit einem sich zwischen den A-Säulen erstreckenden, als Hohlkörperprofil ausgebildeten Querträger und mit zumindest einem an den Querträger angeschlossenen und an der Außenseite des Querträgers in x-Richtung abgestützten Lenksäulenhalter.

Derartige Modulträgerbaugruppen sind zwischen den A-Säulen eines Kraftfahrzeuges angeordnet und tragen Armaturen und andere im Bereich des Armaturenbrettes eines Fahrzeuges angeordnete Komponenten, wie beispielsweise einen oder mehrere Airbags oder dergleichen. Oftmals ist an eine solche Baugruppe auch die Mittelkonsole angeschlossen. Angeschlossen ist an eine solche Baugruppe des Weiteren die Lenksäule, beziehungsweise ein die Lenksäule umfassendes Lenksäulenmodul. Neben der Lenksäule kann ein solches Lenksäulenmodul lenkunterstützende Aktoren oder andere Komponenten umfassen.

Derartige Modulträgerbaugruppen umfassen einen Querträger, der sich zwischen den beiden A-Säulen des Fahrzeuges erstreckt und an diese angeschlossen ist. In vielen Fällen sind derartige, auch als Cross-Car-Beam bezeichnete Querträger als Hohlkammerprofile ausgeführt. Um die gewünschten Geometrien ausbilden zu können, sind derartige, als Hohlkammerprofil ausgeführte Querträger oftmals in Halbschalenbauweise oder als geschlossenes Profil, beispielsweise als Rohr oder Strangpressprofil ausgeführt. In einem solchen Fall ist der Querträger aus zumindest zwei Halbschalen zusammengesetzt, wobei sich die Fügeebene der beiden Halbschalen sowohl etwa in der y-z-Ebene (der vertikalen Querebene), als auch etwa in der x-y-Ebene (der horizontalen Querebene) des Fahrzeuges befindet. Ein solcher Querträger umfasst eine vordere Halbschale und eine hintere Halbschale, die miteinander in aller Regel stoffschlüssig, beispielsweise durch Fügen verbunden sind.

Die an den Querträger einer solchen Modulträgerbaugruppe angeschlossene Lenksäule steht in Wirkverbindung mit den gelenkten Rädern und erstreckt sich, zumindest bei Fahrzeugen mit Frontmotor in den Motorraum. In die Lenksäule werden Schwingungen eingekoppelt, verursacht beim Fahren durch die gelenkten Räder und/oder durch den Betrieb des Motors. Diese Schwingungen werden an das Lenkrad übertragen. Durch den Anschluss der Lenksäule beziehungsweise des Lenksäulenmoduls an die Modulträgerbaugruppe werden Schwingungen auch in deren Querträger eingekoppelt. Aufgrund der Größe der Lenksäule bzw. der gesamten Lenksäuleneinheit, die an die Modulträgerbaugruppe angeschlossen ist, ist ihre Eigenfrequenz relativ niedrig. Bei der Auslegung von Lenksäulen bzw. Lenksäulenmodulen ist man bestrebt, diese möglichst so zu konzipieren, dass die Eigenfrequenz nicht der Eigenfrequenz des Motors entspricht und sich von dieser mit einem gewissen Frequenzabstand unterscheidet, vor allem um Vibrationen und/oder Körperschall zu vermeiden oder zumindest zu reduzieren. In aller Regel wird von einer Eigenfrequenz des Motors von etwa 30 Hz ausgegangen. Davon ausgehend wird vielfach gefordert, dass die Lenksäule bei einer Pkw-Anwendung im eingebauten Zustand eine Eigenfrequenz von zumindest 40 Hz aufweist. Durch diese Maßnahme möchte man erreichen, dass die Lenksäule zur Vermeidung von störenden Geräuschen mit ihrer Eigenfrequenz angeregt wird. Dieses würde zwar die Funktionstüchtigkeit nicht beeinträchtigen, wird jedoch als störend empfunden.

Angeschlossen ist eine solche Lenksäule bzw. das Lenksäulenmodul an den Querträger der Modulträgerbaugruppe mittels zumindest eines Lenksäulenhalters. Bei einem solchen Lenksäulenhalter handelt es sich prinzipiell um ein Winkelstück, das sich an der lenkradseitigen Außenseite des Querträgers abstützt und mit seinem anderen Schenkel unter den Querträger greift. Ein solcher Lenksäulenhalter ist mit dem Querträger verschweißt. Die Lenksäule selbst ist in aller Regel mittels Schrauben an den oder die querträgerseitig befestigten Lenksäulenhalter angeschlossen. Aufgrund des Anschlusses der Lenksäule an den Querträger der Modulträgerbaugruppe hat auch diese Baugruppe Einfluss auf das Schwingungsverhalten der Lenksäule. Durch einen solchen Anschluss der Lenksäule beziehungsweise des Lenksäulenmoduls an den Querträger kann die Eigenfrequenz der Lenksäule um etwa 0,2 Hz angehoben werden.

Um unerwünschte Schwingungen im Fahrzeug und vor allem im Fahrzeuginnenraum zu vermeiden, sind aktive Dämpfungssysteme entwickelt worden, die mit ihren Aktoren Gegenschwingungen erzeugen, um unter Umständen unangenehm empfundene Schwingungen auszulöschen. Bekannt sind derartige aktive Dämpfungssysteme zum Dämpfen der Schwingungen an bzw. in einer Modulträgerbaugruppe aus DE 10 2004 013 343 A1 oder DE 10 2005 030 934 A1. Auch wenn mit derartigen Dämpfersystemen unerwünschte Schwingungen kompensiert bzw. diesen entgegengewirkt werden kann, sind diese aufwendig und in vielen Fällen nicht erwünscht. Diese befinden sich an der Schnittstelle des Querträgers der Modulträgerbaugruppe mit der jeweiligen A-Säule.

DE 10 2009 026 299 A1 offenbart einen Cockpitquerträger für ein Kraftfahrzeug. Bei dem Querträger dieses Standes der Technik handelt es sich um ein kastenförmiges Hohlkörperprofil. Angeschlossen sind daran zwei Lenksäulenhalter. Jeder Lenksäulenhalter ist als Flachteil ausgebildet, hergestellt aus einer Blechplatine. Gemäß dem Konzept des Standes der Technik ist vorgesehen, dass die Flachteile innerhalb des Querträgers Querschnittswandelemente - auch als Schottelemente bezeichnet - aufweisen. Hierdurch soll eine Versteifung des Querträgers erfolgen. Diese Flachteile greifen mit ihrer Schottwand von unten - und somit in z-Richtung - in den Querträger ein. Diese erstrecken sich über die gesamte Querschnittsfläche des Querträgers und sind mit dem gesamten Umfang der inneren Kontur des Querträgers verbunden. Die Schottelemente ragen unterseitig aus dem Querträger heraus. Erst mit Abstand von der Unterseite des Querträgers erstreckt sich in x-Richtung der eigentliche Teil jedes Flachteils, der für die Lenksäulenanbindung genutzt wird.

WO 2008/009683 A1 offenbart eine Anordnung zur Befestigung einer Lenksäule eines Kraftfahrzeuges. Beim Gegenstand dieses Dokumentes ist der Lenksäulenhalter durch zwei, eine U-förmige Aufnahme bildende Flansche an den Querträger angeschlossen. Diese Flansche fassen den Querträger außenseitig ein, und zwar an den in x-Richtung weisenden Außenseiten des kastenförmigen Querträgers. Die Lenksäule selbst ist durch Haltemittel, die an die U-förmige Querlenkeraufnahme angeformt sind, angeschlossen. Dieses Dokument offenbart, dass sich von der einen Außenseite in den Querträger bis zur Innenseite erstreckend eine Schraubenhülse vorgesehen ist.

DE 10 2008 026 631 A1 offenbart einen Instrumententräger für ein Kraftfahrzeug. Gegenstand dieses Dokumentes ist ein solcher Instrumententräger, der über Einschnitte verfügt, in die die Schenkel von Lenksäulenhaltern einsetzbar und darin zum Einrichten einer bestimmungsgemäßen Positionierung verstellbar sind. Bei diesem Instrumententräger ist nicht vorgesehen, dass sich die Lenksäulenhalter an einer Außenwand des Querträgers abstützen und als Winkelstück ausgeführt sind, um auf diese Weise zwei Seiten des Querträgers einzufassen.

Ausgehend von diesem diskutierten Stand der Technik liegt der Erfindung daher die Aufgabe zugrunde, eine Modulträgerbaugruppe der eingangs genannten Art dergestalt weiterzubilden, dass die Gefahr einer Anregung der Lenksäule in ihre Eigenfrequenz, ohne einen Einsatz aktiver Dämpfungssysteme benötigen zu müssen, entgegengewirkt ist.

Gelöst wird diese Aufgabe erfindungsgemäß durch eine eingangs genannte, gattungsgemäße Modulträgerbaugruppe, bei der der zumindest eine Lenksäulenhalter als Winkelstück ausgeführt ist und mit einer durch einen ersten Schenkel bereitgestellten Stützfläche an einer ersten Außenwand des Querträgers abgestützt ist, welcher Lenksäulenhalter über einen weiteren Schenkel verfügt, dessen Oberseite sich unter den Querträger erstreckt, und dass der zumindest eine Lenksäulenhalter an seiner sich an der Außenseite des Querträgers abstützenden Stützfläche einen Stützfortsatz trägt, der sich durch die an die Stützfläche des Lenksäulenhalters grenzende Außenwand des Querträgers hindurch und bis zumindest an die gegenüberliegende Wand des Querträgers hin erstreckt und an diese schwingungsgekoppelt angeschlossen ist.

Bei dieser Modulträgerbaugruppe sind der oder die Lenksäulenhalter ausgeführt, um sich an gegenüberliegenden Wänden des als Hohlkammerprofil ausgeführten Querträgers abzustützen. Ein solcher Lenksäulenhalter ist vorzugsweise einstückig hergestellt. Diese Abstützung erfolgt an den einander gegenüberliegenden Wänden, und zwar nicht durch ein Umgreifen des Querträgers mit einem Lenksäulenhalter, sondern dadurch, dass der Lenksäulenhalter über einen Stützfortsatz verfügt, der sich wenigstens durch eine erste Wand des Querträgers hindurch bis zu der gegenüberliegenden Wand erstreckt oder in diese eingreift oder diese durchgreift. Somit umfasst dieser Lenksäulenhalter eine Stützfläche, an der dieser an derjenigen Wand des Querträgers abgestützt ist, in die der Stützfortsatz des Lenksäulenhalters eingreift. Aus diesem Grunde ist in Bezug auf die Erstreckung in z-Richtung die Durchbrechung, durch die der Stützfortsatz diese erste Wand durchgreift deutlich kleiner als die insgesamt in dieser Richtung zur Verfügung stehende Höhe dieser Wand des Querträgers. Auf diese Weise ist ein solcher Lenksäulenhalter somit einerseits an die Außenwand bzw. einem Außenwandabschnitt des Querträgers und andererseits mittels seines Stützfortsatzes an den zu diesem Außenwandabschnitt weisenden Wandabschnitt der gegenüberliegenden Wand angeschlossen. Die Gesamtstützfläche des Lenksäulenhalters wird somit gebildet durch die Stützfläche, mit der sich dieser an der ersten Wand des Querträgers abstützt und derjenigen Fläche bzw. demjenigen Abschnitt des Stützfortsatzes, der an der gegenüberliegenden Wand abgestützt ist. Dieses Konzept ermöglicht, die der jeweiligen Wand des Querträgers zugeordnete Stützfläche an die gewünschten Erfordernisse anzupassen. So ist in einer Ausgestaltung vorgesehen, dass die Stützfläche des Lenksäulenhalters, mit der dieser an der Außenseite einer ersten Wand des Querträgers abgestützt ist, etwa doppelt so groß bemessen ist wie die Stirnfläche des Stützfortsatzes, mit dem der Lenksäulenhalter an der Innenseite der gegenüberliegenden Wand des Querträgers abgestützt ist. In Bezug auf die von dem Querträger zur Verfügung stehende Höhe der Außenwände ist gemäß einer Ausgestaltung vorgesehen, dass die Gesamtabstützfläche des Lenksäulenhalters kleiner ist als der Außenwandflächenanteil des Querträgers in der Flucht des Lenksäulenhalters in z-Richtung.

Der Anschluss des Stützfortsatzes an der der ersten Wand gegenüberliegenden Wand bzw. des gegenüberliegenden Wandabschnittes erfolgt in einer Art und Weise, dass in Bezug auf übertragene Schwingungen der Stützfortsatz mit der daran angeschlossenen Wand als eine Einheit anzusprechen sind. Erreicht werden kann dieses beispielsweise durch einen stoffschlüssigen Anschluss, wie etwa durch Verschweißen der beiden Teile miteinander. Möglich ist zudem neben einem formschlüssigen Anschluss des Stützfortsatzes an dieser Wand ein Anliegen des Endes des Stützfortsatzes an dieser Wand unter Vorspannung. Bevorzugt wird man eine nicht lösbare Verbindung an dieser Stelle vorsehen. Die Abstützung des Stützfortsatzes eines solchen Lenksäulenhalters an der gegenüberliegenden Wand des Querträgers ist also derart ausgeführt, dass durch diesen eine wirksame Versteifung des Querträgers erfolgt, wobei die Abstützung auch über wenigstens eine innen- oder außenliegende Schweißnaht realisiert sein kann.

Vorzugsweise ist ein solcher Lenksäulenhalter mit einem den Querträger untergreifenden Schenkel ausgeführt, der dann mit der Oberseite dieses Schenkels an der Unterseite des Querträgers anliegt. Hierdurch ist die außenseitige Anlagefläche zwischen dem Lenksäulenhalter und dem Querträger vergrößert. Zudem wird durch eine solche Maßnahme die Möglichkeit eröffnet, eine Anbindungsschweißnaht zwischen dem Lenksäulenhalter und dem Querträger länger auszuführen. Vorzugsweise ist dieser Schenkel des Lenksäulenhalters parallel zur Erstreckung des Stützfortsatzes ausgeführt. Handelt es sich bei dem Querträger um einen in Schalenbauweise hergestellten, kann die vordere Stirnseite dieses Schenkels gegen den Fügeflansch des Querträgers wirken bzw. an diesem anliegen.

Grundsätzlich wird es als ausreichend angesehen, wenn der Stützfortsatz mit seiner stützseitigen Stirnseite unter Vorspannung stehend an der Innenwand des Querträgers anliegt, sodass der Kraftschluss durch diese Anlage bereitgestellt ist. Bevorzugt ist eine Ausgestaltung, bei der der Stützfortsatz im Bereich seines Stützendes an der Innenwand des Querträgers festgelegt ist, und zwar vorzugsweise durch eine Fügeverbindung. Um dieses zu ermöglichen, ist gemäß einem Ausführungsbeispiel vorgesehen, eine Fügedurchbrechung in die Wand des Querträgers einzubringen, an der der Stützfortsatz des Lenksäulenhalters festgelegt werden soll. Eine solche Fügedurchbrechung ist gemäß einem Ausführungsbeispiel hinsichtlich seiner Öffnungsweite kleiner als die an der Wandinnenseite anliegende Stützfläche des Lenksäulenhalters. Die Fügeverbindung kann sodann in der Fügedurchbrechung ausgeführt werden. Damit eine Fügeverbindung hergestellt werden kann, ist es nicht erforderlich, dass die Stirnfläche des Stützfortsatzes an der Innenwand anliegt. Ein geringer, durch eine Schweiß- oder Lotzugabe auszufüllender Fügespalt ist zulässig. Im Allgemeinen wird es als ausreichend angesehen, wenn die Stirnfläche des Stützfortsatzes von der zu fügenden Innenwand mit nicht mehr als 0,5 mm von der Fügefläche beabstandet ist, um eine bestimmungsgemäße Fügeverbindung zu erstellen. Durchaus möglich ist auch eine Ausgestaltung, bei der die Fügedurchbrechung eine lichte Weite aufweist, dass der Stützfortsatz mit einem Endabschnitt in diese eingreift oder sogar aus dieser herausgeführt ist, so dass dann eine Fügeverbindung zwischen dem Stützende des Stützfortsatzes und der Wand in Bezug auf den Umfang des in die Fügedurchbrechung eingreifenden bzw. diesen durchgreifenden Teils des Stützfortsatzes vorgenommen werden kann. Bei einer solchen Ausgestaltung ist auch eine stufige Ausbildung des Stützendes möglich, wobei die Stufe an dem Stützfortsatz ausgebildet ist, damit der durch die Stufe gebildete Absatz an der Innenwand des Querträgers anliegt. Bei einer Ausbildung des Stützendes des Stützfortsatzes mit einer Stufe, wie vorbeschrieben, besteht auch die Möglichkeit, dass der verjüngte Teil des Stützendes eine Durchbrechung in der angrenzenden Wand hindurchgreift und dass der von der Außenseite dieser Wand abragende Teil des Stützendes nach Art eines Niet umgeformt wird, um den Stützfortsatz kraftschlüssig und/oder stoffschlüssig an diese Wand des Querträgers anzuschließen. Außerdem ist es denkbar, dass die Anlagefläche stufenförmig ausgebildet ist.

Es hat sich überraschend gezeigt, dass durch eine solche Maßnahme die Eigenfrequenz der Lenksäule um immerhin etwa 1 Hz angehoben und damit der Frequenzabstand zu schwingungsinduzierenden Komponenten, wie beispielsweise dem Motor des Fahrzeuges nicht unerheblich vergrößert werden konnte. Diese Erhöhung der Eigenfrequenz mag von der reinen Zahl her gering erscheinen, bewirkt in der Praxis jedoch Erhebliches, insbesondere ohne auf aktive Dämpfungssysteme zurückgreifen zu müssen. Zurückgeführt wird dieses auf die geschickte Abstützung und Schwingungseinleitung von der Lenksäule bzw. dem Lenksäulenmodul in den Querträger der Modulträgerbaugruppe. Dabei steht die gleichsinnige Abstützung an den einander gegenüberliegenden Wänden des Querträgers im Vordergrund. Besonders wirksam ist die vorbeschriebene Maßnahme, wenn die Erstreckung des Stützfortsatzes parallel oder etwa parallel zur Längserstreckung der Lenksäule verläuft.

Zu Bereitstellung des Stützschenkels, der außenwandseitigen Abstützung und gegebenenfalls des Schenkels kann der Lenksäulenhalter ausgelegt werden, damit dieser über eine in z-Richtung verlaufende Bohrung verfügt. Diese dient zum Eingreifen von Befestigern zum Anschließen eines Lenksäulenmoduls. Diese Bohrungen können zu diesem Zweck mit einem Innengewinde ausgestattet sein.

Nachfolgend ist die Erfindung anhand eines Ausführungsbeispiels unter Bezugnahme auf die beigefügten Figuren beschrieben. Es zeigen:
- **Fig. 1:**: eine schematisierte perspektivische Ansicht eines Ausschnittes eines Querträgers einer Modulträgerbaugruppe mit einem daran angeschlossenen Lenksäulenmodul,
- **Fig. 2:**: einen vergrößerten Ausschnitt des Querträgers der Modulträgerbaugruppe mit daran angeschlossenen Lenksäulenhaltern,
- **Fig. 2a:**: eine perspektivische Ansicht eines der beiden Lenksäulenhalter der Figur 2,
- **Fig. 3:**: einen Querschnitt durch den Querträger der Figur 2,
- **Fig. 4:**: eine Darstellung entsprechend derjenigen der Figur 3, jedoch mit einem Lenksäulenhalter, angeschlossen an einen Querträger einer Modulträgerbaugruppe gemäß dem Stand der Technik und
- **Fig. 5:**: ein Diagramm zum Darstellen der Eigenfrequenzerhöhung bei Verwenden einer Modulträgerbaugruppe gemäß der Erfindung gegenüber einer Lenksäulenanbindung gemäß dem Stand der Technik.

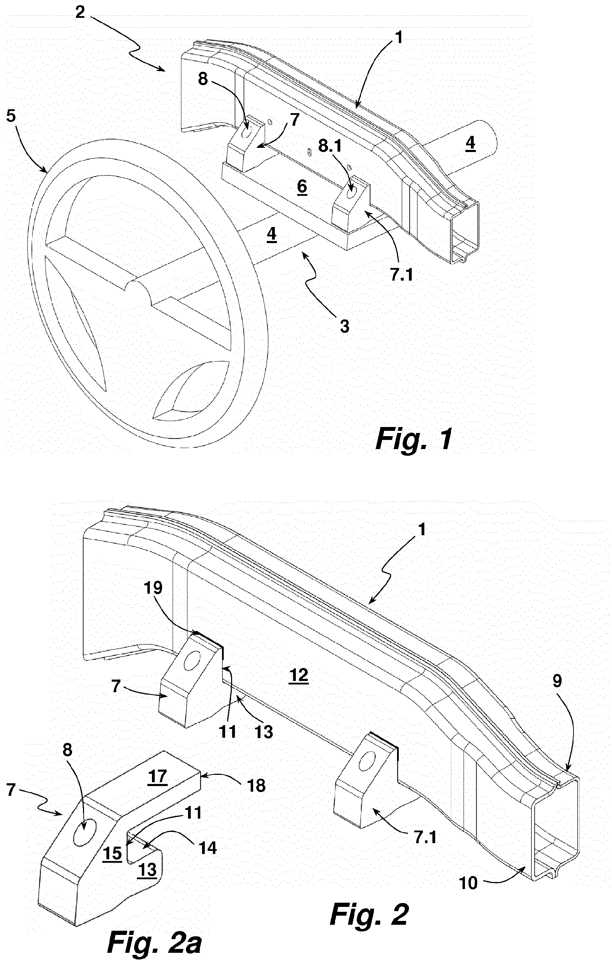

Ein nur in einem Abschnitt in Figur 1 dargestellter Querträger 1 ist Teil einer Modulträgerbaugruppe 2. Dargestellt ist lediglich der Abschnitt des Querträgers 1, der eine Verkröpfung zum Anschluss eines Lenksäulenmoduls 3 aufweist. Der Querträger 1 ist mit seinen beiden, in Figur 1 nicht gezeigten Enden an die Innenseite jeweils einer A-Säule eines Kraftfahrzeuges angeschlossen. Befestigt ist an dem Querträger 1 der Modulträgerbaugruppe 2 ein Lenksäulenmodul 3 mit einer schematisiert dargestellten Lenksäule 4. Das Lenksäulenmodul 3 ist nur mit wenigen Elementen gezeigt, und zwar mit der Lenksäule 4 und mit einem im Fahrzeuginnenraum daran angeschlossenen Lenkrad 5. Mit seinem dem Lenkrad 5 gegenüberliegenden Ende ist die Lenksäule 4 in den Motorraum des Fahrzeuges hineingeführt und darin in nicht näher dargestellter Art und Weise kinematisch zum Lenken der Vorderräder des Fahrzeuges an diese angeschlossen. Zum Anschluss des Lenksäulenmoduls 3 an den Querträger 1 der Modulträgerbaugruppe 2 verfügt das Lenksäulenmodul 3 über eine Anschlussplatte 6. Diese ist an zwei, der Modulträgerbaugruppe 2 zugeordnete Lenksäulenhalter 7, 7.1 angeschlossen. Es ist durchaus möglich, dass Lenksäulenmodul 3 zusätzlich mit weiteren Mitteln an dem Querträger 1 zu befestigen. Die Lenksäulenhalter 7, 7.1 verfügen zum Anschluss des Lenksäulenmoduls 3 über jeweils eine den jeweiligen Halter durchgreifende Bohrung 8, 8.1, so dass das Lenksäulenmodul 3 mit seiner Anschlussplatte 6 mittels Schrauben an die Lenksäulenhalter 7, 7.1 angeschlossen werden kann. Es versteht sich, dass die vorbeschriebene Ausgestaltung des Anschlusses des Lenksäulenmoduls 3 an den Querträger 1 nur beispielhaft ist und auf unterschiedlichste Weise realisiert werden kann. Wesentlich ist, dass der Anschluss des Lenksäulenmoduls 3 an den Querträger 1 kraftschlüssig erfolgt.

Der Querträger 1 des dargestellten Ausführungsbeispiels ist aus zwei Halbschalen 9, 10 zusammengesetzt. Beide Halbschalen 9, 10 weisen im Querschnitt eine U-förmige Profilierung auf. Die Enden der freien Schenkel der U-Profilierung sind nach außen abgekantet, um auf diese Weise jeweils einen Anlageflansch auszubilden. An die Anlageflansche der einen Halbschale grenzen die Anlageflansche der jeweils anderen Halbschale. Im Bereich der Anlageflansche sind die beiden Halbschalen 9, 10 mittels Fügen, etwa durch Schweißungen miteinander verbunden. Auf diese Weise ist ein Hohlkammerprofil ausgebildet, dessen Querschnittsgeometrie sich über die Längserstreckung des Querträgers 1 ändert. Vorstellbar ist auch, dass der Querträger 1 als geschlossenes Hohlprofil in Gestalt eines Rohres oder eines Strangpressprofiles, vorzugsweise aus einem Leichtmetall, wie etwa Aluminium oder Magnesium, hergestellt ist. In einem solchen Fall bedarf es der Anlageflansche nicht. Ebenso ist es bei einer Ausführungsform des Querträgers 1 mittels Halbschalen nicht zwangsläufig notwendig wenigstens einen Anlageflansch auszubilden. Vielmehr können die U-förmigen Halbschalen auch auf Stoß oder überlappend angeordnet und miteinander verbunden sein.

Figur 2 zeigt in einer vergrößerten Darstellung den Abschnitt des Querträgers 1, in dem das Lenksäulenmodul 3 angeschlossen ist, mit den beiden daran befestigten Lenksäulenhaltern 7, 7.1. Nachfolgend ist der Lenksäulenhalter 7 näher beschrieben. Da der Lenksäulenhalter 7.1 identisch mit dem Lenksäulenhalter 7 ist, gelten die nachstehenden Ausführungen gleichermaßen für den Lenksäulenhalter 7.1.

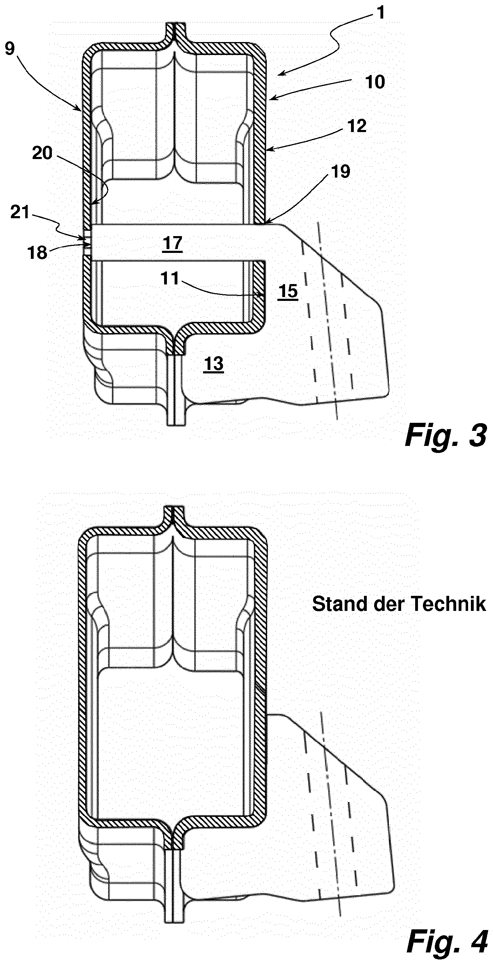

Der Lenksäulenhalter 7 ist prinzipiell als Winkelstück ausgeführt und umfasst eine Stützfläche 11, die an der zu dem Lenkrad 5 weisenden Außenseite 12 der Halbschale 10 des Querträgers 1 anliegt. Neben dem die Stützfläche 11 bereitstellenden Schenkel 15 verfügt der Lenksäulenhalter 7 über einen weiteren Schenkel 13, dessen Oberseite 14 sich unter die Halbschale 10 erstreckt, und zwar bis zu ihrem Fügeflansch (s. auch Figur 3).

In annähernd vertikaler Richtung durchgreift den die Stützfläche 11 bereitstellenden Schenkel 15 des Lenksäulenhalters 7 die Bohrung 8, durch die eine Schraube zum Anschließen des Lenksäulenmoduls 3 hindurchgeführt wird. Durchaus möglich ist es, die Bohrung 8 mit einem Innengewinde auszustatten, so dass eine Befestigungsschraube mit ihrem Schraubenschaft in die Bohrung 8 eingeschraubt werden kann, wobei sich der Kopf der Befestigungsschraube an der in Figur 1 gezeigten Unterseite der Anschlussplatte 6 abstützt, sodass ein Verspannen der Anschlussplatte 6 an den Lenksäulenhalter 7, 7.1 möglich ist.

Der Lenksäulenhalter 7 trägt, ausgehend von seinem Schenkel 15, und zwar bei dem dargestellten Ausführungsbeispiel aufgrund der Querschnittsgeometrie der Halbschale 10 parallel zu dem Schenkel 13 einen Stützfortsatz 17, der die Halbschale 10 durchgreift und mit seiner vorderen Stirnfläche 18 bis an die Innenwand der gegenüberliegenden Halbschale 9 heranreicht (s. auch Figur 3). Zu diesem Zweck ist an entsprechender Stelle in die Halbschale 10 eine Durchbrechung 19 eingebracht, die der Stützfortsatz 17 durchgreift. Mit der Stirnfläche 18 des Stützfortsatzes 17 stützt sich dieser an der Innenseite 20 der die Außenseite 12 bildenden Wand der Halbschale 10 gegenüberliegenden Wand der Halbschale 9 ab.

Um den Stützfortsatz 17 stoffschlüssig mit der Halbschale 9 zu verbinden, ist in die Halbschale 9 eine Fügedurchbrechung 21 eingebracht. Diese ist, wie aus Figur 3 erkennbar, hinsichtlich ihrer Bemessung kleiner als die Fläche, die die Stirnfläche 18 des Stützfortsatzes 17 einnimmt. Dabei ist die Fügedurchbrechung 21 vorzugsweise dergestalt angeordnet, dass sich die Stirnfläche 18 an der Innenwand 20 bezüglich dieser Fügedurchbrechung 21 abstützt. Zweckmäßigerweise ist die Fügedurchbrechung 21 zentriert bezüglich der Stirnfläche 18 des Stützfortsatzes 17 angeordnet. Die Fügedurchbrechung 21 dient dem Zweck in dieser den Stützfortsatz 17 mit der Halbschale 20 stoffschlüssig zu verbinden, und zwar bei dem dargestellten Ausführungsbeispiel durch ein Fügeverfahren, vorzugsweise durch Schweißen. Der in Figur 3 gezeigte Querschnitt zeigt lediglich die Anordnung der einzelnen Teile zueinander, nicht jedoch die für die im stoffschlüssigen Anschluss des Lenksäulenhalters 7 an den Querträger 1 notwendigen Fügeverbindungen.

Die durch die Stirnfläche 18 bereitgestellte Stützfläche des Stützfortsatzes 17 ist bei dem dargestellten Ausführungsbeispiel etwa doppelt so groß wie die Stützfläche 11 des Schenkels 15. Deutlich wird aus Figur 3 zudem, dass die von dem Lenksäulenhalter 7 benötigte Abstützhöhe an dem Querträger 1 nur eine Höhe einnimmt, die weniger als 50 % der Höhe des Querträgers 1 entspricht. Bei dem dargestellten Ausführungsbeispiel wird nur etwa ein Drittel der Höhe des Querträgers 1 für die bestimmungsgemäße Abstützung des Lenksäulenhalters 7 benötigt.

Neben der in der Fügedurchbrechung 21 durchgeführten Fügeverbindung zwischen der Halbschale 9 und dem Stützfortsatz 17 ist der Halter 7 zudem im Bereich seines Schenkels 15 mit der Außenseite 12 der Halbschale 10 durch ein oder mehrere Fügeverbindungen verbunden.

Die Darstellung der Abstützung des Lenksäulenhalters 7 an bzw. in dem Querträger 1 in der Figur 3 zeigt, dass durch die besondere Abstützung nicht nur der Querträger 2 ausgesteift ist, sondern eine geschickte Krafteinleitung auf direktem Wege über den jeweiligen Lenksäulenhalter 7 bzw. 7.1 in beide Halbschalen 9, 10 des Querträgers 1 in derselben Richtung und damit gleichsinnig erfolgt. Unerwartet hat sich gezeigt, dass durch diese Maßnahme die Eigenfrequenz der Lenksäule im in das Fahrzeug eingebauten Zustand nicht unbeträchtlich, und zwar um etwa 1 Hz erhöht werden konnte.

Der Lenksäulenhalter 7 kann im Wege eines Gießverfahrens aus einem hierfür geeigneten Metall hergestellt sein. Gleichfalls ist es möglich, den Lenksäulenhalter als Abschnitt eines Strangpressprofiles auszubilden. Es versteht sich, dass auch andere Ausgestaltungen eingesetzt werden können.

Figur 4 zeigt zum Vergleich mit der erfindungsgemäßen Modulträgerbaugruppe 2 eine solche gemäß dem Stand der Technik. Die Modulträgerbaugruppe gemäß dem Stand der Technik verfügt über Lenksäulenhalter, die zwar an der zum Lenkrad weisenden Seite der einen Halbschale durch eine Fügeverbindung angeschlossen sind, jedoch keinen diese Halbschale durchgreifenden und sich an der Innenseite der anderen Halbschale abstützenden Fortsatz aufweisen.

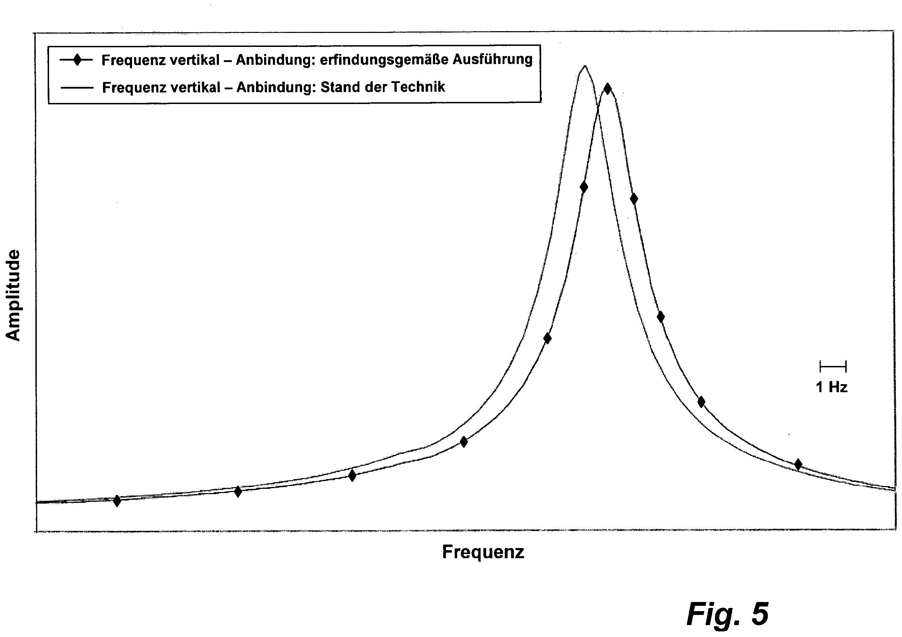

Figur 5 zeigt in einer Gegenüberstellung die vertikale Frequenz der Lenksäule 4 bzw. des Lenksäulenmoduls 3 bei einer Anbindung derselben an den Querträger 1 der Modulträgerbaugruppe 2 unter Verwendung von Lenksäulenhaltern, wie diese im Zusammenhang mit der Erfindung zuvor beschrieben worden sind (siehe unter anderem Figur 3), in einer Gegenüberstellung mit einer Anbindung des Lenksäulenmoduls unter Verwendung von Lenksäulenhalter gemäß dem Stand der Technik, wie dieser in Figur 4 gezeigt ist. Deutlich erkennbar ist, dass bei Verwendung der erfindungsgemäßen Modulträgerbaugruppe mit seinen besonderen Lenksäulenhaltern 7, 7.1 die Eigenfrequenz in nicht unerheblicher Weise erhöht ist.

### Bezugszeichenliste

- 1: Querträger
- 2: Modulträgerbaugruppe
- 3: Lenksäulenmodul
- 4: Lenksäule
- 5: Lenkrad
- 6: Anschlussplatte
- 7, 7.1: Lenksäulenhalter
- 8, 8.1: Bohrung
- 9: Halbschale
- 10: Halbschale
- 11: Stützfläche
- 12: Außenseite
- 13: Schenkel
- 14: Oberseite
- 15: Schenkel
- 17: Stützfortsatz
- 18: Stirnfläche
- 19: Durchbrechung
- 20: Innenseite
- 21: Fügedurchbrechung

## Patentansprüche

1. Modulträgerbaugruppe für ein Kraftfahrzeug zum Positionieren zwischen den A-Säulen der Fahrzeugkarosserie mit einem sich zwischen den A-Säulen erstreckenden, als Hohlkörperprofil ausgebildeten Querträger (1) und mit zumindest einem an den Querträger (1) angeschlossenen und an der Außenseite des Querträgers (1) in x-Richtung abgestützten Lenksäulenhalter (7, 7.1), **dadurch gekennzeichnet, dass** der zumindest eine Lenksäulenhalter (7, 7.1) als Winkelstück ausgeführt ist und mit einer durch einen ersten Schenkel (15) bereitgestellten Stützfläche (11) an einer ersten Außenwand des Querträgers (1) abgestützt ist, welcher Lenksäulenhalter (7, 7.1) über einen weiteren Schenkel (13) verfügt, dessen Oberseite (14) sich unter den Querträger (1) erstreckt, und dass der zumindest eine Lenksäulenhalter (7, 7.1) an seiner sich an der Außenseite (12) des Querträgers (1) abstützenden Stützfläche (11) einen Stützfortsatz (17) trägt, der sich durch die an die Stützfläche (11) des Lenksäulenhalters (7, 7.1) grenzende Außenwand des Querträgers (1) hindurch und bis zumindest an die gegenüberliegende Wand des Querträgers (1) hin erstreckt und an diese schwingungsgekoppelt angeschlossen ist.

2. Modulträgerbaugruppe nach Anspruch 1, **dadurch gekennzeichnet, dass** der Stützfortsatz (17) des Lenksäulenhalters (7, 7.1) eine zur Längserstreckung der daran anzubindenden Lenksäule (4) parallele Erstreckung aufweist.

3. Modulträgerbaugruppe nach Anspruch 1 oder 2, **dadurch gekennzeichnet, dass** die Stirnfläche des Stützfortsatzes unter Vorspannung gegen die Innenwand des Querträgers wirkend angeschlossen ist.

4. Modulträgerbaugruppe nach einem der Ansprüche 1 bis 3, **dadurch gekennzeichnet, dass** die Innenwand des Querträgers, an derjenigen Position, an der sich das Stützende des Stützfortsatzes befindet, eine Stützfortsatzaufnahme aufweist.

5. Modulträgerbaugruppe nach einem der Ansprüche 1 bis 4, **dadurch gekennzeichnet, dass** die Wand des Querträgers (1), an die die Stirnfläche (18) des Stützfortsatzes (17) grenzt, im Bereich der Stirnfläche (18) des Stützfortsatzes (17) eine Fügedurchbrechung (21) aufweist und die Stirnfläche (18) des Stützfortsatzes (17) mit dieser Wand durch eine in der Fügedurchbrechung ausgeführte Fügeverbindung an den Querträger (1) angeschlossen ist.

6. Modulträgerbaugruppe nach einem der Ansprüche 1 bis 5, **dadurch gekennzeichnet, dass** die Modulträgerbaugruppe (2) zwei in Längserstreckung des Querträgers (1) voneinander beabstandete Lenksäulenhalter (7, 7.1) aufweist.

7. Modulträgerbaugruppe nach einem der Ansprüche 1 bis 6, **dadurch gekennzeichnet, dass** der Querträger (1) in Halbschalenbauweise ausgeführt ist.

8. Modulträgerbaugruppe nach Anspruch 7, **dadurch gekennzeichnet, dass** der Querträger (1) aus einer vorderen und einer hinteren Halbschale (9, 10) aufgebaut ist.

9. Modulträgerbaugruppe nach einem der Ansprüche 1 bis 6, **dadurch gekennzeichnet, dass** der Querträger als geschlossenes Strangpressprofil aus einem Leichtmetall ausgeführt ist.

10. Modulträgerbaugruppe nach Anspruch 8, **dadurch gekennzeichnet, dass** die beiden Halbschalen (9, 10) einen etwa U-förmigen Querschnitt aufweisen und die freien Enden der Schenkel zur Ausbildung von Anlageflanschen abgekantet sind.

## Claims

1. A module support assembly for a motor vehicle, said assembly being intended to be positioned between the A-pillars of the vehicle body, and comprising a crossmember (1) that extends between the A-pillars and is formed as a hollow profile, and comprising at least one steering column bracket (7, 7.1) that is attached to the crossmember (1) and is supported on the outside of the crossmember (1) in the x-direction, **characterized in that** the at least one steering column bracket (7, 7.1) is designed as an angle piece and is supported on a first outside wall of the crossmember (1) by means of a support surface (11) provided by a first limb (15), which steering column bracket (7, 7.1) comprises a further limb (13), the upper face (14) of which extends below the crossmember (1), and **in that** the at least one steering column bracket (7, 7.1) has a support projection (17) on the support surface (11) thereof that is supported on the outer face (12) of the crossmember (1), which support projection extends through the outside wall of the crossmember (1) that adjoins the support surface (11) of the steering column bracket (7, 7.1) and extends at least as far as the opposite wall of the crossmember (1) and is oscillation-coupled thereto.

2. The module support assembly according to claim 1, **characterized in that** the extension of the support projection (17) of the steering column bracket (7, 7.1) is parallel to the longitudinal extension of the steering column (4) that is to be attached thereto.

3. The module support assembly according to either claim 1 or claim 2, **characterized in that** the end face of the support projection is operatively connected to the inside wall of the crossmember so as to be preloaded.

4. The module support assembly according to any of claims 1 to 3, **characterized in that** the inside wall of the crossmember comprises a support projection receptacle at the position at which the support end of the support projection is located.

5. The module support assembly according to any of claims 1 to 4, **characterized in that** the wall of the crossmember (1) adjoined by the end face (18) of the support projection (17) comprises a joining aperture (21) in the region of the end face (18) of the support projection (17), and the end face (18) of the support projection (17) is connected to the crossmember (1), at said wall, by means of a join made in the joining aperture.

6. The module support assembly according to any of claims 1 to 5, **characterized in that** the module support assembly (2) comprises two steering column brackets (7, 7.1) that are mutually spaced in the longitudinal extension of the crossmember (1).

7. The module support assembly according to any of claims 1 to 6, **characterized in that** the crossmember (1) is formed in a semi-monocoque design.

8. The module support assembly according to claim 7, **characterized in that** the crossmember (1) is assembled from a front and a rear half-shell (9, 10).

9. The module support assembly according to any of claims 1 to 6, **characterized in that** the crossmember is formed as an extruded profile made of a light metal.

10. The module support assembly according to claim 8, **characterized in that** the two half-shells (9, 10) have an approximately U-shaped cross section and the free ends of the limbs are beveled so as to form contact flanges.

## Revendications

1. Ensemble de support de module pour un véhicule automobile, destiné à être positionné entre les montants A de la carrosserie de véhicule, comprenant une traverse (1) s'étendant entre les montants A et conçue en tant que profilé à corps creux et au moins un support de colonne de direction (7, 7.1) raccordé à la traverse (1) et s'appuyant contre le côté extérieur de la traverse (1) dans la direction x, **caractérisé en ce que** ledit au moins un support de colonne de direction (7, 7.1) est réalisé sous forme de pièce angulaire et s'appuie contre une première paroi extérieure de la traverse (1) par une surface d'appui (11) fournie par une première branche (15), lequel support de colonne de direction (7, 7.1) comporte une autre branche(13) dont le côté supérieur s'étend en dessous de la traverse, et **en ce que** ledit au moins un support de colonne de direction (7, 7.1) porte, sur sa surface d'appui (11) s'appuyant contre le côté extérieur (12) de la traverse (1), un prolongement d'appui (17) qui s'étend à travers la paroi extérieure, adjacente à la surface d'appui (11) du support de colonne de direction (7, 7.1), de la traverse (1) et au moins jusqu'à la paroi opposée de la traverse (1) et est raccordé à cette paroi opposée de manière couplée en vibrations.

2. Ensemble de support de module selon la revendication 1, **caractérisé en ce que** le prolongement d'appui (17) du support de colonne de direction (7, 7.1) présente une étendue parallèle à l'étendue longitudinale de la colonne de direction (4) devant être reliée à celui-ci.

3. Ensemble de support de module selon la revendication 1 ou 2, **caractérisé en ce que** la surface frontale du prolongement d'appui est raccordée de manière à agir sous précontrainte contre la paroi intérieure de la traverse.

4. Ensemble de support de module selon l'une quelconque des revendications 1 à 3, **caractérisé en ce que** la paroi intérieure de la traverse comprend un logement de prolongement d'appui à la position à laquelle l'extrémité d'appui du prolongement d'appui se trouve.

5. Ensemble de support de module selon l'une quelconque des revendications 1 à 4, **caractérisé en ce que** la paroi de la traverse (1) à laquelle la surface frontale (18) du prolongement d'appui (17) est adjacente comprend, dans la région de la surface frontale (18) du prolongement d'appui (17), une ouverture d'assemblage (21) et la surface frontale (18) du prolongement d'appui (17) est raccordée à la traverse (1) par cette paroi au moyen d'une liaison d'assemblage réalisée dans l'ouverture d'assemblage.

6. Ensemble de support de module selon l'une quelconque des revendications 1 à 5, **caractérisé en ce que** l'ensemble de support de module (2) comprend deux supports de colonne de direction (7, 7.1) espacés l'un de l'autre dans l'étendue longitudinale de la traverse (1).

7. Ensemble de support de module selon l'une quelconque des revendications 1 à 6, **caractérisé en ce que** la traverse (1) est réalisée suivant une construction à demi-coques.

8. Ensemble de support de module selon la revendication 7, **caractérisé en ce que** la traverse (1) est constituée d'une demi-coque avant et d'une demi-coque arrière (9, 10).

9. Ensemble de support de module selon l'une quelconque des revendications 1 à 6, **caractérisé en ce que** la traverse est réalisée sous forme de profilé extrudé fermé constitué d'un métal léger.

10. Ensemble de support de module selon la revendication 8, **caractérisé en ce que** les deux demi-coques (9, 10) présentent une section transversale approximativement en forme de U et les extrémités libres des branches sont repliées pour former des rebords d'appui.
